# EUROPEAN PATENT APPLICATION

(11) **EP 4 382 269 A1**
(43) Date of publication of application: **12.06.2024**
(21) Application number: 22853321.2
(22) Date of filing: 22.07.2022
(51) Int. Cl.: B28D 1/14, B23B 39/16

(54) **MULTI-BORING CORE DRILLING APPARATUS**

(30) Priority: 02.08.2021 KR 20210101223
(71) Applicant: Egun Co., Ltd., Gwangju-si, Gyeonggi-do 12817 (KR)
(72) Inventor: LEE, Sung Jun, Gwangju-si, Gyeonggi-do 12808 (KR); LEE, Chae Mun, Seongnam-si, Gyeonggi-do 13298 (KR)
(74) Representative: Frenkel, Matthias Alexander
(86) International application number: PCT/KR2022/010840
(87) International publication number: WO 2023/013943

(57) **Abstract**

A three-hole core drilling machine of the invention includes a body, a vertically reciprocating carriage vertically reciprocably mounted to the body, a fixing plate coupled to one side surface of the carriage, to rotatably support a drive shaft of a motor, a pivoting plate fastened to the fixing plate under a condition that a pivot angle of the pivoting plate is changed. a pair of moving plates movably mounted to opposite sides of the pivoting plate, a drive gear coupled to the drive shaft and a pair of driven gears coupled to a pair of driven shafts rotatably mounted to the pair of moving plates, a pair of moving gears mounted between the drive gear and the pair of driven gears, a first core bit coupled to the drive shaft, and a second core bit and a third core bit coupled to the pair of driven shafts.

## Description

### [Technical Field]

The present invention relates to a core drilling machine, and more particularly to a multi-hole core drilling machine.

### [Prior Art]

A core drilling machine is a mechanical apparatus for drilling a hole into a wall, a ceiling, etc. upon piping construction in a building. Generally, such a core drilling machine constitutes a core drill assembly together with various devices configured to manipulate a core drill.

A general core drill assembly, which is currently used, includes a base fixed to a structure, into which a hole is to be drilled, by an anchor bolt, a stand disposed to be perpendicular to the base and formed with a rack at one side surface thereof, a driving body with a pinion mounted therein, the driving body being vertically reciprocable along the stand in accordance with a rotating operation of a handle, and a core drill mounted to the driving body and configured to drill a hole into a particular portion of the structure. Here, the core drill is constituted by a core bit configured to drill a hole into the structure through frictional contact between the core bit and the structure, and a drive motor configured to rotate the core bit at a high speed.

The core drill assembly having the above-mentioned configuration operates as follows. When the handle installed at the driving body is rotated in a state in which the base is fixed to a wall or a bottom surface of the structure using a plurality of anchor bolts, the pinion of the driving body, which engages with the rack of the stand, moves along the rack. As a result, the driving body reciprocates vertically along the stand. In this state, when electric power is applied to the drive motor, the core bit is rotated. The core bit, which rotates at a high speed, drills a hole into the structure while moving forwards.

However, such a conventional core drilling machine performs drilling using only one core bit mounted thereto. For this reason, for drilling of a plurality of holes, the core drilling machine should be moved to hole positions one by one, and tasks for fixing the core drilling machine using anchor bolts and drilling a hole should be performed for the hole positions one by one. As a result, there are problems in that work is troublesome, and a lot of time is taken.

In particular, in a working environment in a large-scale factory requiring rapid drilling of a number of holes, use of only the conventional core drilling machine may cause a problem in that high costs are taken because a number of workers should be committed, in addition to a problem of an increased working time.

The present invention proposes a multi-hole core drilling machine in order to solve the above-mentioned problems.

### [Disclosure]

### [Technical Problem]

It is an object of the present invention to provide a multi-hole core drilling machine.

### [Technical Solution]

In accordance with the present invention, the above and other objects can be accomplished by the provision of a three-hole core drilling machine including a body, a vertically reciprocating carriage vertically reciprocably mounted to the body, a fixing plate coupled to one side surface of the carriage, to rotatably support a drive shaft of a motor, a pivoting plate fastened to the fixing plate under a condition that a pivot angle of the pivoting plate is changed. a pair of moving plates movably mounted to opposite sides of the pivoting plate, a drive gear coupled to the drive shaft and a pair of driven gears coupled to a pair of driven shafts rotatably mounted to the pair of moving plates, a pair of moving gears mounted between the drive gear and the pair of driven gears, a first core bit coupled to the drive shaft, and a second core bit and a third core bit coupled to the pair of driven shafts.

The fixing plate may include a pivot guide slit formed through the fixing plate while having an arc shape. The pivoting plate may include a plurality of fastening holes formed to extend vertically through the pivoting plate. The pivoting plate may be fixed at a predetermined pivot position with respect to the fixing plate by fasteners fastened to the plurality of fastening holes and the pivot guide slit. The pivoting plate may include a plurality of movement guide slits formed lengthily in a width direction. The pair of moving plates may include a plurality of fastening holes formed to extend vertically through the pair of moving plates. The pair of moving plates may be fixed at predetermined positions in a longitudinal direction with respect to the pivoting plate by fasteners fastened to the plurality of fastening holes and the plurality of movement guide slits. The pair of moving plates may include a pair of slots inclinedly formed in a longitudinal direction, for mounting of fastening shaft members with the pair of moving gears rotatably mounted thereto. Water supply hoses may be connected to lower portions of the drive shaft and the pair of driven shafts, respectively, to supply cooling water. The body may include a base fixed to a structure to be drilled, and a stand vertically coupled to the base and formed with a gear at one side surface thereof. The carriage may be provided with a pinion engaged with the gear, and may be vertically reciprocably mounted to the stand. The gear may include a rack.

### [Advantageous effects]

In accordance with the three-hole core drilling machine of the exemplary embodiment of the present invention, it may be possible to simultaneously drill three holes by simultaneously rotating the three core bits.

In addition, in the three-hole core drilling machine of the exemplary embodiment of the present invention, relative pivot angles among the three core bits and distances among the three core bits may be adjusted and, as such, it may be possible to easily simultaneously drill three holes while appropriately adjusting the distances among the three holes to be drilled within a predetermined range.

### [Description of Drawings]

FIG. 1 is a perspective view schematically showing a three-hole core drilling machine according to an exemplary embodiment of the present invention.
FIG. 2 is a front view schematically showing an inner structure of the three-hole core drilling machine according to the exemplary embodiment of the present invention.
FIG. 3 is a top view showing a pivot angle and length adjusting structure of the three-hole core drilling machine.
FIG. 4 is a top view showing a state in which the moving plates are coupled to the fixing plate after moving with respect to the fixing plate from a state of FIG. 3.

### [Best Mode]

Embodiments may be variously varied and may have various forms. In connection with this, specific embodiments will be illustrated in the drawings, and will be described in detail in the specification, but embodiments should not be construed as limited to the specific embodiments. It is to be appreciated that all changes, equivalents, and substitutes that do not depart from the spirit and technical scope of the embodiments are encompassed in the embodiments.

It should be noted that the terms used herein are merely used to describe a specific embodiment, not to limit the present invention. Incidentally, unless clearly used otherwise, singular expressions include a plural meaning. In this application, the term "comprising," "including," or the like, is intended to express the existence of the characteristic, the numeral, the step, the operation, the element, the part, or the combination thereof, and does not exclude another characteristic, numeral, step, operation, element, part, or any combination thereof, or any addition thereto.

Hereinafter, embodiments of the present disclosure will be described in detail with reference to the accompanying drawings. It is noted that the same reference numerals in the drawings designate the same constituent elements, respectively. When the detailed description of the relevant known function or configuration is determined to unnecessarily obscure the gist of the present invention, the detailed description will be omitted. For similar reasons, in the accompanying drawings, a part of constituent elements is exaggerated, omitted, or schematically illustrated.

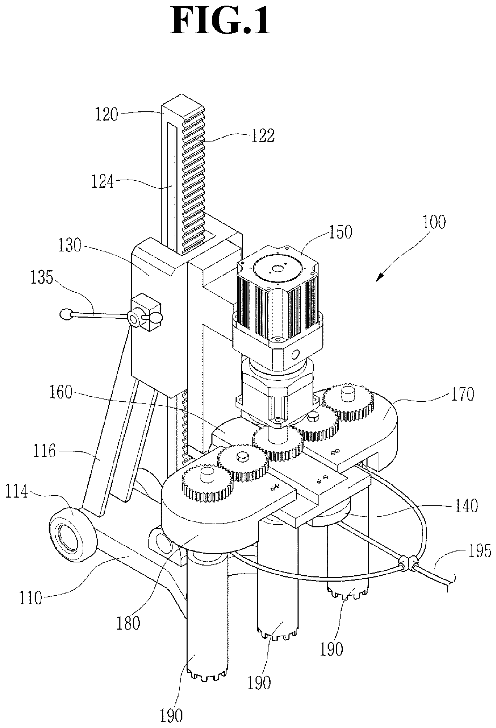

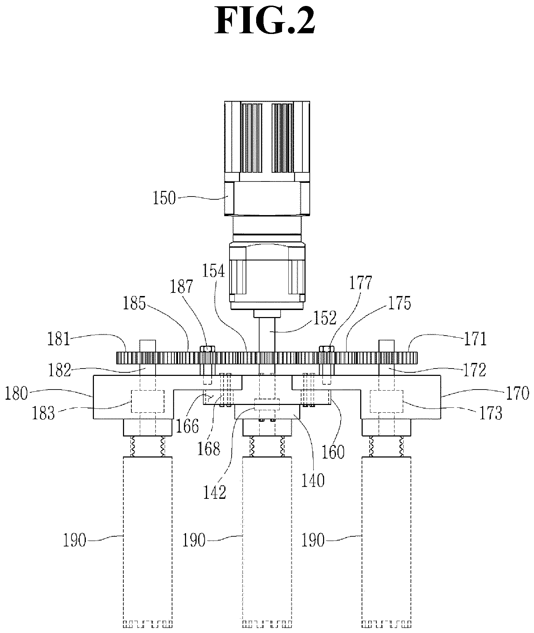

FIG. 1 is a perspective view schematically showing a three-hole core drilling machine according to an exemplary embodiment of the present invention. FIG. 2 is a front view schematically showing an inner structure of the three-hole core drilling machine according to the exemplary embodiment of the present invention.

The three-hole core drilling machine according to the exemplary embodiment of the present invention, which is designated by reference numeral "100", includes a base 110 fixed to a structure to be drilled (for example, a concrete floor, etc.), a stand 120 vertically coupled to the base 110 and formed with a gear (for example, a rack) 122 at one side surface thereof, a vertically reciprocating carriage 130 provided with a pinion engaged with the rack 122 and vertically reciprocably mounted to the stand 120, a fixing plate 140 coupled to one side surface of the carriage 130, to rotatably support a drive shaft 152 of a motor 150, a pivoting plate 160 fastened to the fixing plate 140 under the condition that a pivot angle of the pivoting plate 160 is changed, and a pair of moving plates 170 and 180 movably mounted to opposite sides of the pivoting plate 160. The three-hole core drilling machine 100 also includes a drive gear 154 coupled to the drive shaft 152, a pair of driven gears 171 and 181 coupled to a pair of driven shafts 172 and 182 rotatably mounted to the pair of moving plates 170 and 180, a pair of moving gears 175 and 185 mounted between the drive gear 154 and the pair of driven gears 171 and 181, a first core bit 190 coupled to the drive shaft 152, and a second core bit 190 and a third core bit 190 coupled to the pair of driven shafts 172 and 182.

Among the constituent elements of the multi-hole core drilling machine 100 according to the exemplary embodiment of the present invention, the base 110 and the stand 120 may be collectively referred to as a "body".

The three-hole core drilling machine 100 is a core drilling machine configured to simultaneously drill three holes into a horizontal bottom, a wall, or an inclined or curved surface having various shapes in a concrete structure.

The base 110 is provided with at least one pair of anchor bolts 112 and, as such, may be fixed to a surface of a structure. Although the anchor bolts 112 are shown in FIG. 1 as being disposed at opposite ends of the base 110, a hole may be disposed at a central portion of the base 110, and an anchor bolt 112 may be fixed to a surface of the structure through the hole. In addition, the base 110 is provided with at least one pair of wheels 114 and, as such, the entirety of the three-hole core drilling machine 100 may be easily movable.

The stand 120 is vertically coupled to the base 110. The stand 120 may be formed to have a rectangular column shape. A connecting frame 116 may be coupled between a middle portion of the stand 120 and the base 110, to support the stand 120 with respect to the base 110. The rack 122 may be formed at one side surface of the stand 120, to vertically reciprocate the carriage 130 mounted to the stand 120.

The carriage 130 may be provided with the pinion (not shown) engaged with the rack 122 and, as such, may be vertically reciprocably mounted to the stand 120. The carriage 130 may be provided with a lever 135 configured to rotate the pinion. Accordingly, upon operating the three-hole core drilling machine 100, the operator may rotate the lever 135, thereby vertically reciprocating the carriage 130. In addition, guide grooves 124 may be formed at opposite side surfaces of the stand 120, respectively, to guide and support vertical reciprocation of the carriage 130.

The motor 150 may be coupled to an upper portion of one side surface of the carriage 130, and the fixing plate 140 may be coupled to a lower portion of the side surface of the carriage 130. The motor 150 may be, for example, an electric motor, and the drive shaft 152 thereof may be rotatably supported by a bearing 142 mounted to the fixing plate 140.

The pivoting plate 160 may be mounted to an upper surface of the fixing plate 140 such that the pivoting plate 160 is pivotable about the drive shaft 152. The pivoting plate 160 may be fixed to the fixing plate 140 by a fastener under the condition that a pivot angle of the pivot plate 160 is changed.

In addition, the pair of moving plates 170 and 180 may be mounted to an upper surface of the pivoting plate 160 at opposite side portions of the pivoting plate 160 under the condition that relative positions of the moving plates 170 and 180 with respect to the pivoting plate 160 in a longitudinal direction are varied, in order to vary extension lengths of the moving plates 170 and 180. As shown in FIG. 2, the pair of moving plates 170 and 180 may include a first moving plate 170 movably mounted to the upper surface of the pivoting plate 160 at a right portion of the pivoting plate 160, and a second moving plate 180 movably mounted to the upper surface of the pivoting plate 160 at a left portion of the pivoting plate 160. A first driven shaft 172 may be rotatably mounted to the first moving plate 170 by a first bearing 173, and a second driven shaft 182 may be rotatably mounted to the second moving plate 180 by a second bearing 183.

The drive gear 154 may be coupled to the drive shaft 152, a first driven gear 171 may be coupled to the first driven shaft 172, and a second driven gear 181 may be coupled to the second driven shaft 182.

The pair of moving gears 175 and 185 may be mounted between the drive gear 154 and the pair of driven gears 171 and 181 and, as such, the motor 150 may simultaneously rotate the drive shaft 152, the first driven shaft 172, and the second driven shaft 182.

The first core bit 190 may be coupled to a lower end of the drive shaft 152, the second core bit 190 may be coupled to a lower end of the first driven shaft 172, and the third core bit 190 may be coupled to a lower end of the second driven shaft 182. The first core bit 190, the second core bit 190, and the third core bit 190 may have the same size. However, three core bits having various sizes may be coupled to the drive shaft 152, the first driven shaft 172, and the third driven shaft 182, respectively.

In the three-hole core drilling machine 100 according to the exemplary embodiment of the present invention, the first core bit 190, the second core bit 190, and the third core bit 190 may be fixed in a state in which pivot angle positions of the first core bit 190, the second core bit 190, and the third core bit 190 with respect to the base 110 and relative lengths among the first core bit 190, the second core bit 190, and the third core bit 190 are adjusted. Thus, the three-hole core drilling machine 100 may simultaneously drill three holes in a state in which relative pivot angles and relative lengths among the three holes are appropriately adjusted.

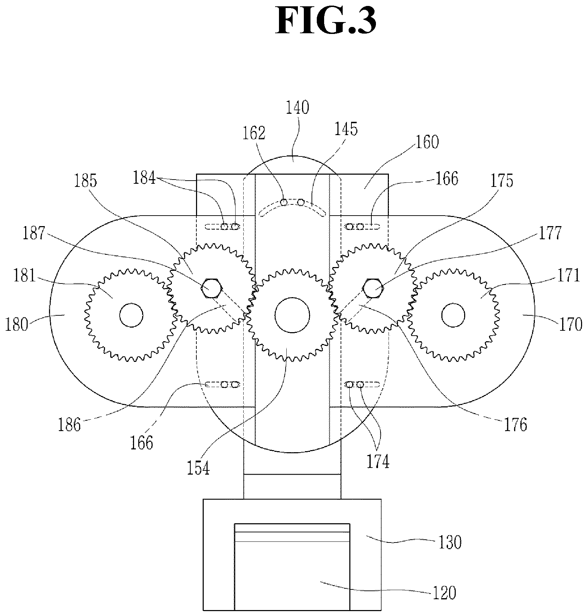

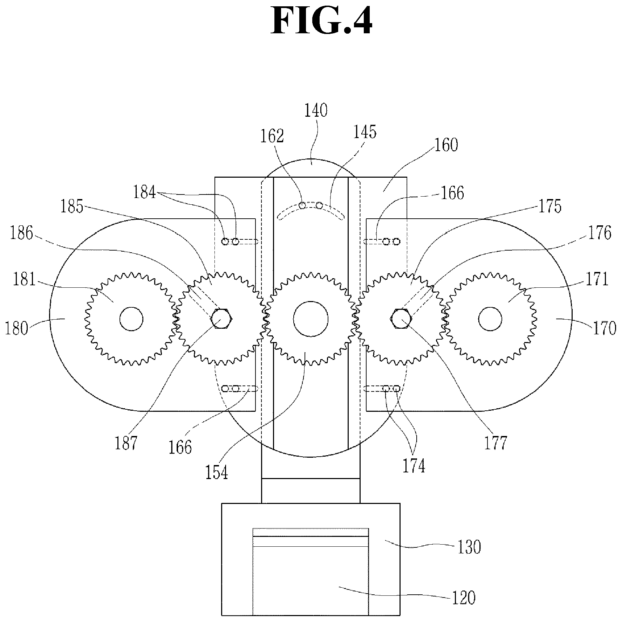

FIG. 3 is a top view showing a pivot angle and length adjusting structure of the three-hole core drilling machine. FIG. 4 is a top view showing a state in which the moving plates are coupled to the fixing plate after moving with respect to the fixing plate from a state of FIG. 3.

The fixing plate 140 may be formed to take the form of a rectangular plate having an arc shape at a front side thereof. A rear side of the fixing plate 140 may be coupled to the carriage 130 and, as such, the fixing plate 140 may be vertically reciprocable together with the carriage 130. A pivot guide slit 145 having an arc shape may be formed through the fixing plate 140 near an edge of the front side of the fixing plate 140.

The pivoting plate 160 may be mounted to the upper surface of the fixing plate 140 such that the pivoting plate 160 is pivotable about the drive shaft 152 concentric with the fixing plate 140. The pivoting plate 160 may be formed to have a rectangular shape in which one side thereof facing the carriage 130 is formed to have an arc shape, and opposite sides thereof extend lengthily beyond opposite sides of the fixing plate 140. A pair of fastening holes 162 is formed through the pivoting plate 160 at positions corresponding to the pivot guide slit 145 of the fixing plate 140 such that the fastening holes 162 extend vertically through the pivoting plate 160.

As shown in FIG. 2, it may be possible to fix the pivoting plate 160 on the fixing plate 140 at a predetermined pivot position by fastening fasteners 168 constituted by bolts and nuts through the pair of fastening holes 162 of the pivoting plate 160 and the pivot guide slit 145 of the fixing plate 140.

As shown in FIGs. 2 and 3, the pivoting plate 160 may be provided, at opposite sides thereof, with two pairs of movement guide slits 166 formed lengthily in a width direction. The two pairs of movement guide slits 166 may be formed through the pivoting plate 160 in parallel to have a predetermined length. Portions of the pivoting plate 160 overlapping with the pir of moving plates 170 and 180 may have a reduced thickness and, as such, the pivoting plate 160 may be formed to have steps. In this case, the two pairs of movement guide slits 166 may be formed at the stepped thin portions of the pivoting plate 160, and limit positions of the pair of moving plates 170 and 180, at which movements of the moving plates 170 and 180 toward the pivoting plate 160 are limited by the steps, may be set.

As shown in FIG. 3, the pair of moving plates 170 and 180 may be provided with four pairs of fastening holes 174 and 184 formed through the moving plates 170 and 180 at positions corresponding to the two pairs of movement guide slits 166. That is, two pairs of first fastening holes 174 may be formed through the moving plate 170, and two pairs of second fastening holes 184 may be formed through the moving plate 180. In the case in which an upper surface of the pivoting plate 160 at opposite sides of the pivoting plate 160 is formed to be stepped, the pair of moving plates 170 and 180 may each also have a reduced thickness at one side thereof and, as such, a lower surface of each of the moving plates 170 and 180 at the side of each of the moving plates 170 and 180 may be formed to be stepped. The pair of moving plates 170 and 180 may be formed to have a plate shape, and covers may be coupled to the moving plates 170 and 180 in order to cover the pair of driven gears 171 and 181 and the pair of moving gears 175 and 185 mounted on the moving plates 170 and 180. Alternatively, the plates and the covers are coupled to each other to be integrated and, as such, the pair of moving plates 170 and 180 may be configured in the form of a case.

As shown in FIGs. 2 to 4, it may be possible to fix the first moving plate 170 and the second moving plate 180 with respect to the pivoting plate 160 at predetermined positions in a longitudinal direction by fastening fasteners 168 through the plurality of fastening holes 174 of the first moving plate 170, the plurality of fastening holes 184 of the second moving plate 180, and the two pairs of movement guide slits 166 of the pivoting plate 160. The fasteners 168 are constituted by bolts and nuts, and the two pairs of fastening holes 174 and the two pairs of fastening holes 184 may be disposed outside the pair of moving gears 175 and 185 in a width direction, in order to prevent the pair of moving gears 175 and 185 from interfering with the bolts.

As shown in FIGs. 3 and 4, it is preferred that the pair of moving plates 170 and 180 further include a pair of slots 176 and 186 formed to be inclined in a longitudinal direction, for mounting of fastening shaft members 177 and 187 to which the pair of moving gears 175 and 185 are rotatably mounted.

The first moving gear 175 may be mounted to the first moving plate 170 such that the first moving gear 175 engages between the drive gear 154 and the first driven gear 171, and the second moving gear 185 may be mounted to the second moving plate 180 such that the second moving gear 185 engages between the drive gear 154 and the second driven gear 181. To this end, a first slot 176 may be formed through the first moving plate 170 such that the first slot 176 is inclinedly disposed in a longitudinal direction, and a second slot 186 may be formed through the second moving plate 180 such that the second slot 186 is inclinedly disposed in a longitudinal direction. The first moving gear 175 may be rotatably mounted to the first fastening shaft member 177 fastened to the first slot 176, and the second moving gear 185 may be rotatably mounted to the second fastening shaft member 187 fastened to the second slot 186. The first fastening shaft member 177 and the second fastening shaft member 187 may rotatably mount the first moving gear 175 and the second moving gear 185 at a predetermined height from upper surfaces of the first moving plate 170 and the second moving plate 180.

When the pair of moving plates 170 and 180 is fastened such that the pair of moving plates 170 and 180 is disposed near the pivoting plate 160, as shown in FIG. 3, the distance between the drive gear 154 and the pair of driven gears 171 and 181 is small. In this case, when viewed in FIG. 3, centers of the pair of moving gears 175 and 185 may be disposed relatively above centers of the drive gear 154 and the pair of driven gears 171 and 181.

On the other hand, when the pair of moving plates 170 and 180 is fastened such that the pair of moving plates 170 and 180 is disposed far from the pivoting plate 160, as shown in FIG. 4, the distance between the drive gear 154 and the pair of driven gears 171 and 181 is great. In this case, the moving gears 175 and 185 are relatively loosened. Accordingly, when viewed in FIG. 3, the centers of the pair of moving gears 175 and 185 may be disposed at relatively low positions to be nearer to the centers of the drive gear 154 and the pair of driven gears 171 and 181.

Thus, even when the pair of driven gears 171 and 181 move, the pair of moving gears 175 and 185 may be fastened at positions corresponding to moved positions of the pair of driven gears 171 and 181 such that the pair of moving gears 175 and 185 simultaneously engages with the drive gear 154 and the pair of driven gears 171 and 181.

Meanwhile, as shown in FIG. 1, water supply hoses 195 may be connected to lower portions of the drive shaft 152, the first driven shaft 172, and the second driven shaft 182, respectively, to supply cooling water. That is, the core drilling machine 100 according to the exemplary embodiment of the present invention may be a wet core drilling machine configured to drill holes by simultaneously rotating core bits while supplying water. For convenience of illustration, the water supply hoses 195 are omitted from FIG. 2.

The water supply hoses 195 are detachably connected to a water supply pipe provided with a valve, and may be connected in parallel in order to supply water along channels communicating with interiors of respective core bits 190 after passing through interiors of the drive shaft 152, the first driven shaft 172, and the second driven shaft 182. Since the distances among the drive shaft 152, the first driven shaft 172, and the second driven shaft 182 are variable, the water supply hoses 195 connected between among drive shaft 152, the first driven shaft 172, and the second driven shaft 182 may be formed of a flexible material and may be connected while having a sufficient length.

In accordance with the three-hole core drilling machine of the exemplary embodiment of the present invention, it may be possible to simultaneously drill three holes by simultaneously rotating the three core bits.

In addition, relative pivot angles among the three core bits and distances among the three core bits may be adjusted and, as such, it may be possible to easily simultaneously drill three holes while appropriately adjusting the distances among the three holes to be drilled within a predetermined range.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**[Description of Reference Numerals in Drawings]**

| | | | |
|---|---|---|---|
| 100: | three-hole core drilling machine | | |
| 110: | base | 112: | anchor bolt |
| 114: | wheel | 116: | connecting frame |
| 120: | stand | 122: | rack |
| 124: | guide groove | 130: | vertically reciprocating carriage |
| 135: | lever | 140: | fixing plate |
| 142: | bearing | 145: | pivot guide slit |
| 150: | motor | 152: | drive shaft |
| 154: | drive gear | 160: | pivoting plate |
| 162: | fastening hole | 166: | movement guide slit |
| 168: | fastener | | |
| 170: | first moving plate | 171: | first driven gear |
| 172: | first driven shaft | 173: | first bearing |
| 174: | first fastening hole | 175: | first moving gear |
| 176: | first slot | 177: | first fastening shaft member |
| 180: | second moving plate | 181: | second driven gear |
| 182: | second driven shaft | 183: | second bearing |
| 184: | second fastening hole | 185: | second moving gear |
| 186: | second slot | 187: | second fastening shaft member |
| 190: | core bit | 195: | water supply hose |

### [Industrial Applicability]

The multi-hole core drilling machine is industrially applicable for construction work and pulling-down of a construction in a construction site.

## Claims

1. A three-hole core drilling machine comprising:
a body;
a vertically reciprocating carriage vertically reciprocably mounted to the body;
a fixing plate coupled to one side surface of the carriage, to rotatably support a drive shaft of a motor;
a pivoting plate fastened to the fixing plate under a condition that a pivot angle of the pivoting plate is changed;
a pair of moving plates movably mounted to opposite sides of the pivoting plate;
a drive gear coupled to the drive shaft and a pair of driven gears coupled to a pair of driven shafts rotatably mounted to the pair of moving plates;
a pair of moving gears mounted between the drive gear and the pair of driven gears;
a first core bit coupled to the drive shaft; and
a second core bit and a third core bit coupled to the pair of driven shafts.

2. The three-hole core drilling machine according to claim 1, wherein:
the fixing plate comprises a pivot guide slit formed through the fixing plate while having an arc shape;
the pivoting plate comprises a plurality of fastening holes formed to extend vertically through the pivoting plate; and
the pivoting plate is fixed at a predetermined pivot position with respect to the fixing plate by fasteners fastened to the plurality of fastening holes and the pivot guide slit.

3. The three-hole core drilling machine according to claim 1, wherein:
the pivoting plate comprises a plurality of movement guide slits formed lengthily in a width direction;
the pair of moving plates comprises a plurality of fastening holes formed to extend vertically through the pair of moving plates; and
the pair of moving plates is fixed at predetermined positions in a longitudinal direction with respect to the pivoting plate by fasteners fastened to the plurality of fastening holes and the plurality of movement guide slits.

4. The three-hole core drilling machine according to claim 2, wherein:
the pivoting plate comprises a plurality of movement guide slits formed lengthily in a width direction;
the pair of moving plates comprises a plurality of fastening holes formed to extend vertically through the pair of moving plates; and
the pair of moving plates is fixed at predetermined positions in a longitudinal direction with respect to the pivoting plate by fasteners fastened to the plurality of fastening holes and the plurality of movement guide slits.

5. The three-hole core drilling machine according to claim 3, wherein the pair of moving plates comprises a pair of slots inclinedly formed in a longitudinal direction, for mounting of fastening shaft members with the pair of moving gears rotatably mounted thereto.

6. The three-hole core drilling machine according to claim 4, wherein the pair of moving plates comprises a pair of slots inclinedly formed in a longitudinal direction, for mounting of fastening shaft members with the pair of moving gears rotatably mounted thereto.

7. The three-hole core drilling machine according to claim 3, wherein water supply hoses are connected to lower portions of the drive shaft and the pair of driven shafts, respectively, to supply cooling water.

8. The three-hole core drilling machine according to claim 4, wherein water supply hoses are connected to lower portions of the drive shaft and the pair of driven shafts, respectively, to supply cooling water.

9. The three-hole core drilling machine according to claim 1, wherein:
the body comprises:
a base fixed to a structure to be drilled; and
a stand vertically coupled to the base and formed with a gear at one side surface thereof; and
the carriage is provided with a pinion engaged with the gear, and is vertically reciprocably mounted to the stand.

10. The three-hole core drilling machine according to claim 9, wherein the gear comprises a rack.
